# EUROPEAN PATENT SPECIFICATION

(11) **EP 3 156 168 B1**
(45) Date of publication and mention of the grant of the patent: **25.12.2019**
(21) Application number: 14894509.0
(22) Date of filing: 30.07.2014
(51) Int. Cl.: B23K 35/30, B23K 9/18, C22C 38/00, C22C 38/02, C22C 38/04, C22C 38/08, C22C 38/12, C22C 38/16, C22C 38/20, C22C 38/22, C22C 38/28, C22C 38/32, C22C 38/38, C22C 38/44, C22C 38/50, C22C 38/54, C22C 38/58, C22C 38/14, C22C 38/42, B23K 101/10, B23K 103/04

(54) **SUBMERGED ARC WELDING WIRE AND WELDING METHOD**
UNTERPULVERSCHWEISSDRAHT UND SCHWEISSVERFAHREN
FIL DE SOUDAGE À L'ARC SUBMERGÉ ET PROCÉDÉ DE SOUDAGE

(30) Priority: 11.06.2014 CN 201410258769
(43) Date of publication of application: 19.04.2017
(73) Proprietor: INSTITUTE OF RESEARCH OF IRON AND STEEL, JIANGSU PROVINCE/SHA-STEEL, CO.LTD, Suzhou, Jiangsu 215625 (CN)
(72) Inventor: ZHANG, Yu, Suzhou Jiangsu 215625 (CN); PAN, Xin, Suzhou Jiangsu 215625 (CN); WANG, Yinbo, Suzhou Jiangsu 215625 (CN)
(74) Representative: Hirsch & Associés
(86) International application number: PCT/CN2014/083305
(87) International publication number: WO 2015/188427

(56) References cited:
- CN-A- 101 559 544
- CN-A- 102 049 599
- CN-A- 102 069 320
- CN-A- 103 317 257
- CN-A- 103 350 289
- CN-A- 103 464 926
- JP-A- 2003 138 340
- JP-A- 2008 023 569
- JP-A- 2008 163 455
- JP-A- 2011 206 828

## Description

### TECHINICAL FIELD

This invention relates to the field of welding technique, and in particular to a submerged arc welding wire and a welding method.

### BACKGROUND OF THE INVENTION

Welding technique is an operation process using welding material (welding rod or welding wire) to join two or more parent materials (i.e. the workpieces to be welded) into a whole under elevated temperature or elevated pressure conditions. With the continuous development of industrial technology, welding has evolved from a single processing technique into a new discipline in which multiple disciplines of modern science and technology mingle with each other, it has become a comprehensive engineering technology involving several technical fields such as materials, welding materials, control of welding wire production process as well as mechanization and automation thereof, welding quality control, post-weld heat treatment and the like, has been widely used in various sectors of industrial production, and plays an important role in the promotion of industrial development and technological progress of products as well as the promotion of national economic development.

Among the various application fields of welding technique, pipeline welding has always been one of the focuses with widespread concern in the industry, especially in recent years when the rapid economic and social development stimulates the sustained growth of energy demand and drives the rapid development of oil and gas pipeline construction. At present, the welding process and material technology for X80 and the lower grades of pipeline have been fairly mature and have been successfully applied in the pipeline construction for China's West-East "second line" and the ongoing "third line" natural gas transmission project.

However, with the continuous growth of energy demand, the industry is in an urgent need to improve the transmission efficiency, while the use of more pipes of high-strength grades, such as X90, X100 and X120 and the other high-strength steel pipes, can not only reach the goal of reducing material consumption through thinning pipe thickness, but also increase pipe diameter and delivery pressure, thereby improving oil transmission efficiency and save operating cost. Accordingly, high-strength grade steel pipes are the main trend and direction of the future oil and gas pipeline construction, and naturally, the related pipeline welding has gradually become the focus of attention of the research and development personnel.

Pipeline welding mainly adopts the welding method of submerged arc welding. Due to the increasingly larger-scale structure and the gradually stringent security levels, the industry is imposing increasingly higher requirements on the application of X100, X120 and other ultra-high grade pipelines, especially the requirements on pipeline welding process are getting higher and higher. For example, there exist stringent requirements in all the aspects of the high strength, high toughness, excellent formability and high welding efficiency (large heat input, high welding speed) of the submerged arc welding wire for pipeline, the tensile strength and low-temperature impact resistance of the weld metal after welding, and the process of pipe welding, etc.

In the prior art, the welding materials for the ultra-high grade pipelines such as X100 and X120 have not been widely reported. Patents CN201110176764.2 and CN201310025309.1 both disclose a submerged arc welding wire specified for X100 steel grade pipeline, which combines with SJ101 alkaline welding, the tensile strength of the weld metal of thus obtained steel pipe is 760 MPa or more, the impact energy of the weld metal at -40°C is more than 150 J; however, the above welding material can meet the welding pipe manufacture needs of X80 and X100 pipeline, but cannot meet the welding pipe manufacture needs of X120 pipeline.

Therefore, how to find a kind of submerged arc welding wire for X120 steel grade pipeline and the corresponding welding method which can meet at the same time the requirements in the aspects of strength, low-temperature toughness and high welding speed remains to be a problem needed to be solved urgently in the industry.

CN 102 069 320 A relates to a submerged arc welding wire for super strength pipeline steel and production method thereof.

JP 2008 163 455 A relates to a weld steel pipe with low-temperature toughness for high-strength thick-walled line pipe and process for producing the same.

### SUMMARY OF THE INVENTION

A technical problem to be solved by the present invention is to provide a submerged arc welding wire and a welding method thereof. The submerged arc welding wire provided by this invention is a submerged arc welding wire for X120 steel grade pipeline, and the welding process carried out with the submerged arc welding wire provided by this invention and the welded joints after welding can meet the welding pipe manufacture needs of X120 pipelines. The scope of the invention is defined in the appended claims.

This invention discloses a submerged arc welding wire, characterized in that which comprises, by mass percentage: 0.85 to 1.60% of Mo; 2.50 to 4.50% of Ni; 0.10 to 0.30% of Ti; 0.005 to 0.02% of B; 0.005 to 0.02% of REM; 1.60 to 2.00% of Mn; optionally 0.65 to 1.45% of Cr and/or 0.10 to 0.50% of Cu; more than 0 and less than or equal to 0.06% of C; more than 0 and less than or equal to 0.10% of Si; more than 0 and less than or equal to 0.008% of P; more than 0 and less than or equal to 0.006% of S; and the remainder being Fe. Compared with the prior art, this invention provides a submerged arc solid welding wire for ultra-high strength pipeline steel X120 welding, after welding in combination with MgO-SiO₂-CaF₂-Al₂O₃ based weak-alkaline sintering flux, ultra-high strength X120 welded joints meeting performance requirements can be obtained, which joints exhibit high tensile strength and good low-temperature toughness, and the welding process features a high welding speed. Experimental results indicate that the weld metal of the submerged arc welded joint obtained by welding with the submerged arc welding wire provided by this invention exhibits a tensile strength of ≥ 920 MPa, an impact energy at -40°C of ≥ 100 J, an elongation of ≥ 18%, and the welding speed can be up to 2.4 m/min.

### DETAILED DESCRIPTION OF EMBODIMENTS

The preferred embodiments of the present invention will be described below in combination with examples to further understand the present invention, however, it is to be noted that these descriptions are merely illustrative of the features and advantages of the invention and are not intended to limit the scope of the invention.

This invention discloses a submerged arc welding wire, characterized in that which comprises, by mass percentage:
0.85 to 1.60% of Mo;
2.50 to 4.50% of Ni;
0.10 to 0.30% of Ti;
0.005 to 0.02% of B;
0.005 to 0.02% of REM;
1.60 to 2.00% of Mn; optionally 0.65 to 1.45% of Cr and/or 0.10 to 0.50% of Cu;
more than 0 and less than or equal to 0.06% of C;
more than 0 and less than or equal to 0.10% of Si;
more than 0 and less than or equal to 0.008% of P;
more than 0 and less than or equal to 0.006% of S; and
the remainder being Fe.

The raw materials used in the present invention are not particularly limited in their sources, and can be those purchased commercially.

The purities of all the raw materials in the present invention are not particularly limited, as long as they are the purities known to those skilled in the art, and the analytical purity is preferable.

In the present invention, the mass percentage content of Mo is preferably determined based on the comprehensive judgment of target weld metal strength and the contents of other alloy elements such as Ni and Ti. In this invention, according to the composition by mass percentage, the mass percentage content of Mo in said welding wire is preferably from 0.85 to 1.60%, more preferably from 1.0 to 1.5%, and most preferably from 1.1 to 1.3%; the source of Mo is not particularly limited in the present invention, and it can be prepared according to the methods known to those skilled in the art or can be purchased commercially; the purity of Mo is not particularly limited in the present invention, and it can be the purity known to those skilled in the art for the preparation of submerged arc welding wire.

In this invention, Mo is added into the submerged arc welding wire as a trace element, which can enhance the weld metal strength and the low-temperature impact toughness; meanwhile, the addition of a certain amount of Mo can effectively reduce the phase transition temperature of the weld metal during the post-weld cooling process to refine the weld metal structure, and at the same time expand the formation temperature range of acicular ferrite and bainite. The structure refinement of submerged arc welding wire will enhance the weld metal strength, and the promotion of acicular ferrite will enhance the low-temperature impact toughness.

In this invention, according to the composition by mass percentage, the mass percentage content of Mn in said welding wire is preferably from 1.60 to 2.00%, more preferably from 1.70 to 1.90%, and most preferably from 1.1 to 1.3%; the source of Mn is not particularly limited in the present invention, and it can be prepared according to the methods known to those skilled in the art or can be purchased commercially; the purity of Mn is not particularly limited in the present invention, and it can be the purity known to those skilled in the art for the preparation of submerged arc welding wire.

In this invention, Mn is added into the submerged arc welding wire as a trace element. When the content of Mn, which serves as one of the main deoxidation elements in the weld metal and also as one of the most effective elements for enhancing the strength of the steel plate and the weld metal, is 1.60% or more, it will have an apparent effect on the enhancement of strength; however, a content of more than 2.0% of Mn will significantly reduce the low-temperature impact toughness of the weld metal.

In this invention, in view of the fact that the Ni/Mn ratio has a direct influence on the low-temperature impact toughness of the weld metal, the Ni/Mn ratio is determined based on the comprehensive judgment of performance requirements for target weld metal and the mass percentage content of Mn. In this invention, according to the composition by mass percentage, the mass percentage content of Ni in said welding wire is preferably from 2.5 to 4.5%, more preferably from 3.0 to 4.0%, and most preferably from 3.3 to 4.7%; the source of Ni is not particularly limited in the present invention, and it can be prepared according to the methods known to those skilled in the art or can be purchased commercially; the purity of Ni is not particularly limited in the present invention, and it can be the purity known to those skilled in the art for the preparation of submerged arc welding wire.

In this invention, Ni is added into the submerged arc welding wire as a trace element, mainly to enhance the low-temperature toughness of the weld metal, and at the same time enhance the strength of the weld metal by making use of its solid solution strengthening effect. The mechanism by which Ni enhances the low-temperature toughness is realized by toughening the ferrite matrix. Both Ni and Mn are austenite stabilizing elements, which, with a certain amount of addition, can decrease the phase transition temperature of austenite and thus enhance the strength. However, the influences of the two elements on the impact toughness are not exactly the same, so both of them are added simultaneously.

The mass percentage content of Ti in this invention is preferably made in accordance with the influence of the flux and the welding process. In this invention, according to the composition by mass percentage, the mass percentage content of Ti in said welding wire is preferably from 0.10 to 0.30%, more preferably from 0.15 to 0.25%, and most preferably from 0.18 to 0.22%; the source of Ti is not particularly limited in the present invention, and it can be prepared according to the methods known to those skilled in the art or can be purchased commercially; the purity of Ti is not particularly limited in the present invention, and it can be the purity known to those skilled in the art for the preparation of submerged arc welding wire.

In this invention, Ti is added into the submerged arc welding wire as a trace element, the size of the oxides it forms can be refined and its volume content will be increased obviously, thus the formation of acicular ferrite in the weld metal can be largely facilitated.

In this invention, according to the composition by mass percentage, the mass percentage content of B in said welding wire is preferably from 0.005 to 0.02%, more preferably from 0.008 to 0.015%, and most preferably from 0.01 to 0.013%; the source of B is not particularly limited in the present invention, and it can be prepared according to the methods known to those skilled in the art or can be purchased commercially; the purity of B is not particularly limited in the present invention, and it can be the purity known to those skilled in the art for the preparation of submerged arc welding wire.

In this invention, B is added into the submerged arc welding wire as a trace element, which can effectively enhance the hardenability and the strength of the weld metal, and facilitate the formation of the intragranular structure in the weld metal by making use of its feature of tending to segregate grain boundary, and at the same time suppress the bainitic and martensitic structures formed from boundary nucleation, thereby enhancing the low-temperature toughness of the weld metal.

In this invention, according to the composition by mass percentage, the mass percentage content of REM in said welding wire is preferably from 0.005 to 0.2%, more preferably from 0.01 to 0.15%, and most preferably from 0.05 to 0.10%; the REM in this invention is rare earth element, the composition of the REM is not particularly limited in this invention, and it can be the composition of REM known to those skilled in the art. Preferably, in this invention, according to the composition by mass percentage, REM contains more than or equal to 50% of La, more than or equal to 50% of Ce, or more than or equal to 50% of the mixture of La and Ce; the source of REM is not particularly limited in the present invention, and it can be prepared according to the methods known to those skilled in the art or can be purchased commercially; the purity of REM is not particularly limited in the present invention, and it can be the purity known to those skilled in the art for the preparation of submerged arc welding wire.

In this invention, REM is added into the submerged arc welding wire as a key trace element, which, on one hand, can remove oxygen to reduce the oxygen content in the weld metal and thus enhance the low-temperature impact toughness of the weld metal, at the same time can also improve the segregation of P and S and thus enhance the crack resistance of the weld metal; on the other hand, by making use of the feature that the oxides it forms are easy to disperse while not prone to gather and grow, it can facilitate the formation of intragranular acicular structure and refine the microstructure of the weld metal, thereby enhancing the low-temperature toughness of the weld metal.

In this invention, according to the composition by mass percentage, the mass percentage content of C in said welding wire is preferably less than or equal to 0.06%, more preferably less than or equal to 0.05%, and most preferably less than or equal to 0.03%. A high C content is detrimental to the low-temperature impact toughness and weldability of iron-based materials, so the C content is controlled in this invention. A reduction in the C content can reduce the hardenability of the weld metal and thereby decrease the martensite transformation tendency, even if martensite is formed, a lower C content can also reduce the hardness of martensite, thereby improving the low-temperature impact toughness; in addition, a reduction in the C content can further reduce the susceptibility of welding cold cracks and improve welding quality, thereby enhancing the low-temperature toughness of the weld metal and improving cold crack susceptibility.

In this invention, according to the composition by mass percentage, the mass percentage content of Si in said welding wire is preferably less than or equal to 0.10%, more preferably less than or equal to 0.07%, and most preferably less than or equal to 0.04%. A high Si content will, on one hand, increase the hot cracking tendency of the weld metal and thus be detrimental to the welding; on the other hand, promote the formation tendency of grain boundary ferrite and side-plate ferrite in the weld metal, thereby impairing the low-temperature impact toughness.

In this invention, according to the composition by mass percentage, said welding wire further contains impurity element P. The mass percentage content of P in said welding wire is preferably controlled to be less than or equal to 0.008%, more preferably controlled to be less than or equal to 0.005%, and most preferably controlled to be less than or equal to 0.003%; in this invention, according to the composition by mass percentage, said welding wire further contains impurity element S. The mass percentage content of S in said welding wire is preferably controlled to be less than or equal to 0.006%, more preferably controlled to be less than or equal to 0.004%, and most preferably controlled to be less than or equal to 0.002%.

In this invention, said submerged arc welding wire preferably further contains Cr; in this invention, according to the composition by mass percentage, the mass percentage content of Cr in said welding wire is preferably from 0.65 to 1.45%, more preferably from 0.85 to 1.25%, and most preferably from 0.95 to 1.15%; the source of Cr is not particularly limited in the present invention, and it can be prepared according to the methods known to those skilled in the art or can be purchased commercially; the purity of Cr is not particularly limited in the present invention, and it can be the purity known to those skilled in the art for the preparation of submerged arc welding wire.

In this invention, Cr is added into the submerged arc welding wire as a trace element. As one of the elements that can effectively enhance the hardenability and strength of the weld metal, when its content is less than 0.65, the strengthening effect will not be obvious; but when its content exceeds 1.45%, the low-temperature impact toughness of the weld metal will be impaired.

In this invention, said submerged arc welding wire preferably further contains Cu; in this invention, according to the composition by mass percentage, the mass percentage content of Cu in said welding wire is preferably from 0.10 to 0.50%, more preferably from 0.20 to 0.40%, and most preferably from 0.25 to 0.35%; the source of Cu is not particularly limited in the present invention, and it can be prepared according to the methods known to those skilled in the art or can be purchased commercially; the purity of Cu is not particularly limited in the present invention, and it can be the purity known to those skilled in the art for the preparation of submerged arc welding wire.

In this invention, Cu is added into the submerged arc welding wire as a trace element, which, on one hand, can enhance strength of the weld metal through solid solution strengthening, and on the other hand, can enhance the corrosion resistance of the weld metal. When its content is less than or equal to 0.10%, its effect on the strength and the corrosion resistance will not be obvious; but when its content is more than or equal to 0.50%, it will cause difficulty in the smelting of the steel wire rod for the welding wire and in the control of the surface quality; meanwhile, in multi-pass weld, the subsequent weld pass will have a tempering effect on the previous pass, this can induce the precipitation of Cu particle phase, and thus play a role of largely enhancing strength of the weld metal under the premise of no damage to the impact toughness of the weld metal.

The present invention provides a submerged arc welding wire for ultra-high strength pipeline, which can be used for the submerged arc welding pipe manufacture of ultra-high strength X120 steel grade pipeline. The alloy design of high Mo, high Ti, high B and REM of the submerged arc welding wire ensures the weld metal after welding can obtain a weld structure dominated by acicular ferrite under large heat input welding conditions, thus consideration is given to both the strength and the toughness, thereby the large input welding requirements are satisfied; the alloy design of low C, low Si and high Ni ensures the less carbon equivalent of the weld metal, the less cold crack susceptibility and the less formation of brittle phase, and is conducive to the low-temperature toughness of the weld, while the high Ni design broadens the low-temperature toughness stable region of the weld metal by toughening ferrite matrix, and also provides a basis for the weld metal to adapt to welding of large heat input and welding of high welding speed.

The present invention provides a welding method, characterized in that which comprises the following steps: welding a submerged arc welding wire according to any one of the above-described embodiments with a MgO-SiO₂-CaF₂-Al₂O₃ based weak-alkaline sintering flux to obtain a weld metal; wherein the welding speed of the welding is preferably from 1.8 to 2.4 m/min, more preferably from 1.9 to 2.3 m/min, and most preferably from 2.0 to 2.2 m/min; and the heat input of the welding is preferably from 15 to 150 kJ/cm, more preferably from 30 to 120 kJ/cm, and most preferably from 50 to 100 kJ/cm.

The MgO-SiO₂-CaF₂-Al₂O₃ based weak-alkaline sintering flux is not particularly limited in the present invention, and it can be the MgO-SiO₂-CaF₂-Al₂O₃ based weak-alkaline sintering flux known to those skilled in the art for the submerged arc welding. In order to ensure the welding effect, it is preferable to preheat the MgO-SiO₂-CaF₂-Al₂O₃ based weak-alkaline sintering flux prior to said welding in the present invention. The preheating temperature is preferably from 300 to 400°C, and more preferably from 330 to 370°C; the preheating time is preferably from 1 to 3 hours, and more preferably from 1.5 to 2.5 hours; the other conditions for the preheating are not particularly limited in the present invention, and they can be the preheating conditions known to those skilled in the art for the weak-alkaline sintering fluxes. The welding process is not particularly limited in the present invention, and it can be the process known to those skilled in the art for submerged arc welding; the other welding conditions are not particularly limited in the present invention, and they can be the welding conditions known to those skilled in the art; the devices for the welding are not particularly limited in the present invention, and they can be the devices for submerged arc welding known to those skilled in the art.

Using the welding wire provided herein and the matching MgO-SiO₂-CaF₂-Al₂O₃ based weak-alkaline flux, the welding method provided by this invention can realize welding of high welding speed and thereby meet the requirements of high-efficiency welding.

This invention further discloses a weld metal, characterized in that which comprises, by mass percentage:
0.85 to 1.60% of Mo;
2.50 to 4.50% of Ni;
0.005 to 0.30% of Ti;
0.002 to 0.02% of B;
0.002 to 0.02% of REM;
1.60 to 2_{.}00% of Mn; optionally 0.65 to 1.45% of Cr and/or 0.10 to 0.50% of Cu;
more than 0 and less than or equal to 0.06% of C;
more than 0 and less than or equal to 0.20% of Si;
less than or equal to 0.008% of P;
less than or equal to 0.006% of S; and
the remainder being Fe.

The weld metal according to this invention is obtained by welding a submerged arc welding wire according to any one of the above-described embodiments through a welding method according to any one of the above-described embodiments.

In this invention, in view of the combined effect of the flux and the welding process, according to the composition by mass percentage, the mass percentage content of Ti in said weld metal according to the present invention is preferably from 0.05 to 0.30%, more preferably from 0.10 to 0.25%, and most preferably from 0.15 to 0.20%; with the content of Ti in said weld metal falling within above content range, the size of the oxides it forms can be refined and its volume content will be increased obviously, so that the formation of acicular ferrite in the weld metal can be largely facilitated.

In this invention, according to the composition by mass percentage, the mass percentage content of B in said weld metal is preferably from 0.002 to 0.02%, more preferably from 0.005 to 0.017%, and most preferably from 0.01 to 0.014%; with the content of B in said weld metal falling within this content range, this invention makes use of its feature of tending to segregate grain boundary to promote the formation of intragranular structure, and at the same time suppresses the bainitic and martensitic structures formed from boundary nucleation, so as to enhance the low-temperature toughness of the weld metal.

In this invention, according to the composition by mass percentage, the mass percentage content of REM in said weld metal is preferably from 0.002 to 0.02%, more preferably from 0.006 to 0.017%, and most preferably from 0.01 to 0.014%; the REM according to the present invention is as described above with regard to REM and its descriptions are not repeated here.

In this invention, according to the composition by mass percentage, the mass percentage content of Si is preferably less than or equal to 0.20%, more preferably less than or equal to 0.15%, and most preferably less than or equal to 0.10%. A high Si content will, on one hand, increase the hot cracking tendency of the weld metal and thus be detrimental to the welding; on the other hand, promote the formation tendency of grain boundary ferrite and side-plate ferrite in the weld metal, thereby impairing the low-temperature impact toughness, however, a certain amount of SiO₂ needs to be addition to the submerged arc flux to maintain welding technological performance, so the Si content in the weld metal will increase, but it should be controlled to be less than or equal to 0.20%. When its content is more than 0.20%, the brittle phase M-A component in the weld metal, especially in the multi-pass weld, will be increased remarkably and impair the low-temperature toughness.

The other components contained in the weld metal according to the invention are as described above with regard to the element composition, the precedence and the principles in the aforementioned welding wire and their descriptions are not repeated here.

In this invention, the weld metal obtained according to the abovementioned welding method is subjected to performance tests. Results show that the weld metal provided by the invention exhibits a tensile strength of ≥ 920 MPa, an elongation of ≥ 18%, and an impact energy at -40°C of ≥ 100 J; the maximum welding speed during the welding process according to this invention reaches 2.4 m/min, and the maximum heat input reaches 150 kJ/cm.

In order to further illustrate the present invention, a submerged arc welding wire and a welding method thereof according to the present invention will be described below in detail with reference to the following examples, but the scope of the present invention is not limited by the following examples.

### Example 1

The test plate for welding was X120 pipeline steel plate with a thickness of 16.3 mm and a cross-sectional dimension of 350×800 mm. Single-wire submerged arc welding procedure was adopted, in which the welding speed was 2.0 m/min, the welding heat input was 32 kJ/cm, and the groove was of single V. A solid welding wire with a diameter of 3.2 mm was used, and its chemical composition (by mass percentage) is shown in Table 1 in which the chemical compositions of the submerged arc solid welding wires used in Examples 1 to 18 are all given. For the flux, a MgO-SiO₂-CaF₂-Al₂O₃ weak-alkaline sintering flux with basicity of 1.35 was used, and the flux was heated to 350°C and maintained for 2 hours prior to the welding.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 2

The same steel plate and flux as in Example 1 were used. The wire composition was the same as that of Example 1 and the diameter thereof was 4 mm.

Twin-wire submerged arc welding procedure was adopted, in which the welding heat input was 65 kJ/cm, the welding speed was 1.8 m/min, the groove was of double V, and one pass each for the front and back.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 3

A welding wire with the same composition as in Example 1 but different diameter of 4 mm was used. The composition and thickness of the test plate for welding were the same as in Example 1, but the cross-sectional dimension was 450×1200 mm. For the flux, a MgO-SiO₂-CaF₂-Al₂O₃ weak-alkaline sintering flux with basicity of 1.32 was used.

Double-sided four-wire submerged arc welding procedure was adopted, in which the groove was of single V, and one welding pass each for the front and back; the welding heat input was 75 kJ/cm, and the welding speed was 2.1 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 4

The test plate for welding was X120 pipeline steel plate with a thickness of 17.2 mm and a cross-sectional dimension of 450×1000 mm. A solid welding wire with a diameter of 4 mm was used, and its chemical composition (by mass percentage) is shown in Table 1 in which the chemical compositions of the submerged arc solid welding wires used in Examples 1 to 18 are all given. For the flux, a MgO-SiO₂-CaF₂-Al₂O₃ based weak-alkaline sintering flux with basicity of 1.38 was used, and the flux was heated to 350°C and maintained for 2 hours prior to the welding.

Single-wire submerged arc welding procedure was adopted, in which the groove was of single V, the welding heat input was 48 kJ/cm, and the welding speed was 1.95 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 5

The same test plate, welding wire and flux for welding as in Example 4 were used.

Twin-wire submerged arc welding procedure was adopted, in which the groove was of single V, the welding heat input was 78 kJ/cm, and the welding speed was 2.05 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 6

The same test plate, welding wire and flux for welding as in Example 4 were used.

Double-sided four-wire submerged arc welding procedure was adopted, in which the groove was of double V, the welding heat input was 65 kJ/cm, and the welding speed was 2.2 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 7-15

Solid welding wires with different compositions and a diameter of 4 mm were used, respectively. For the flux, a MgO-SiO₂-CaF₂-Al₂O₃ based weak-alkaline sintering flux with basicity of 1.28 was used, and the flux was heated to 350°C and maintained for 2 hours prior to the welding.

The test plate for welding was 14.3 mm thick X120 pipeline steel plate. The above welding wires and flux were used to conduct inside welding and outside welding on the production line for steel pipes with an outer diameter of 1219. Four-wire submerged arc welding was adopted, in which the groove was of double V, and one pass each for the front and back; the heat input was 65 and 68 kJ/cm for the inside and outside welding, respectively, and the welding speed was 2.25 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 16

The test plate for welding was a high-strength steel plate with a thickness of 26 mm and tensile strength of 925 MPa.

A solid welding wire with diameter of 4 mm was used, and its composition (by mass percentage) is shown in Table 1 in which the chemical compositions of the submerged arc solid welding wires used in Examples 1 to 18 are all given. For the flux, a MgO-SiO₂-CaF₂-Al₂O₃ based weak-alkaline sintering flux with basicity of 1.34 was used, and the flux was heated to 350°C for 2 hours prior to the welding. Single-sided three-wire submerged arc welding procedure was adopted, in which the groove was of single V, welding by one side and molding by double sides were carried out, the welding heat input was 136 kJ/cm, and the welding speed was 2.21 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 17

The test plate for welding was a high strength steel plate with a thickness of 20 mm, yield strength of 845 MPa and tensile strength of 967 MPa.

A solid welding wire with a diameter of 4 mm was used, and its composition (by mass percentage) is as shown in Table 1 in which the chemical compositions of the submerged arc solid welding wires used in Examples 1 to 18 are all given. For the flux, a MgO-SiO₂-CaF₂-Al₂O₃ based weak-alkaline sintering flux with basicity of 1.27 was used, and the flux was heated to 350°C and maintained for 2 hours prior to the welding. Single-sided three-wire submerged arc welding procedure was adopted, in which the groove was of single V, welding by one side and molding by double sides were carried out, the welding heat input was 124 kJ/cm, and the welding speed was 2.15 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

### Example 18

The test plate for welding was a high-strength steel plate with a thickness of 20 mm, yield strength of 835 MPa and tensile strength of 945 MPa.

A solid welding wire with a diameter of 4 mm was used, and its composition (by mass percentage) is as shown in Table 1 in which the chemical compositions of the submerged arc solid welding wires used in Examples 1 to 18 are all given. For the flux, a MgO-SiO₂-CaF₂-Al₂O₃ based weak-alkaline sintering flux with basicity of 1.30 was used, and the flux was heated to 350°C and maintained for 2 hours prior to the welding. Double-sided twin-wire submerged arc welding procedure was adopted, in which the groove was of double V, one pass each for the front and back, the welding heat input was 105 kJ/cm, and the welding speed was 1.9 m/min.

No defect was detected in the flaw detection performed on the welded joint after welding using X ray and ultrasonic wave. The weld metal composition (by mass percentage) in the welded joint is shown in Table 2, in which the chemical compositions of the weld metal in the welded joints obtained from Examples 1 to 18 are all given. The test results of the mechanical property of the weld metal are shown in Table 3, in which the mechanical properties of the weld metal in the welded joints obtained from Examples 1 to 18 are all given.

**Table 1: The chemical compositions (wt%) of the submerged arc solid welding wires used in Examples 1 to 18**

| | C | Si | Mn | P | S | Mo | Ni | Cr | Ti | Cu | B | REM |
|---|---|---|---|---|---|---|---|---|---|---|---|---|
| 1-3# | 0.02 | 0.07 | 1.67 | 0.0067 | 0.0040 | 1.24 | 2.85 | 0.95 | 0.22 | - | 0.0118 | 0.0060 |
| 4-6# | 0.05 | 0.06 | 1.72 | 0.0052 | 0.0046 | 1.45 | 2.78 | 1.12 | 0.24 | - | 0.0133 | 0.0120 |
| 7# | 0.06 | 0.09 | 1.95 | 0.0068 | 0.0035 | 1.33 | 3.83 | - | 0.21 | 0.19 | 0.0151 | 0.0080 |
| 8# | 0.04 | 0.05 | 1.81 | 0.0074 | 0.0035 | 1.15 | 4.16 | - | 0.26 | 0.25 | 0.0178 | 0.0089 |
| 9# | 0.05 | 0.08 | 1.87 | 0.0063 | 0.0032 | 1.14 | 4.42 | - | 0.13 | 0.18 | 0.0158 | 0.0100 |
| 10# | 0.06 | 0.09 | 1.83 | 0.0058 | 0.0046 | 0.95 | 2.65 | 1.40 | 0.24 | - | 0.0144 | 0.0070 |
| 11# | 0.04 | 0.07 | 1.72 | 0.0072 | 0.0050 | 0.90 | 2.76 | 1.27 | 0.28 | - | 0.0162 | 0.0080 |
| 12# | 0.04 | 0.07 | 1.64 | 0.0064 | 0.0050 | 1.26 | 3.76 | 0.87 | 0.17 | - | 0.0154 | 0.0092 |
| 13# | 0.03 | 0.08 | 1.96 | 0.0072 | 0.0053 | 1.55 | 3.86 | - | 0.24 | 0.28 | 0.0124 | 0.0126 |
| 14# | 0.03 | 0.08 | 1.83 | 0.0063 | 0.0042 | 1.48 | 4.12 | - | 0.27 | 0.26 | 0.0137 | 0.0107 |
| 15# | 0.04 | 0.06 | 1.98 | 0.0053 | 0.0038 | 1.58 | 4.32 | - | 0.25 | 0.16 | 0.0128 | 0.0087 |
| 16# | 0.05 | 0.06 | 1.62 | 0.0072 | 0.0038 | 0.88 | 2.68 | 0.75 | 0.22 | 0.18 | 0.0066 | 0.0075 |
| 17# | 0.05 | 0.08 | 1.75 | 0.0068 | 0.0045 | 1.23 | 2.98 | 0.85 | 0.18 | 0.21 | 0.0076 | 0.0095 |
| 18# | 0.04 | 0.07 | 1.82 | 0.0065 | 0.0042 | 1.44 | 3.15 | 0.75 | 0.15 | 0.24 | 0.0085 | 0.0090 |

**Table 2: The chemical compositions (wt%) of the weld metal in the welded joints prepared from Examples 1 to 18**

| | C | Si | Mn | P | S | Mo | Ni | Cr | Ti | Cu | B | REM |
|---|---|---|---|---|---|---|---|---|---|---|---|---|
| 1# | 0.06 | 0.17 | 1.73 | 0.0072 | 0.0035 | 1.05 | 2.54 | 0.76 | 0.11 | - | 0.0042 | 0.0015 |
| 2# | 0.06 | 0.16 | 1.72 | 0.0073 | 0.0034 | 1.02 | 2.52 | 0.75 | 0.10 | - | 0.0040 | 0.0017 |
| 3# | 0.06 | 0.19 | 1.70 | 0.0071 | 0.0036 | 0.98 | 2.43 | 0.72 | 0.09 | - | 0.0038 | 0.0016 |
| 4# | 0.04 | 0.17 | 1.63 | 0.0057 | 0.0042 | 1.26 | 3.12 | 1.23 | 0.12 | - | 0.0043 | 0.0042 |
| 5# | 0.05 | 0.18 | 1.67 | 0.0058 | 0.0041 | 1.22 | 3.05 | 1.13 | 0.09 | - | 0.0037 | 0.0038 |
| 6# | 0.05 | 0.18 | 1.71 | 0.0061 | 0.0036 | 1.19 | 2.95 | 1.08 | 0.08 | - | 0.0034 | 0.0039 |
| 7# | 0.05 | 0.16 | 1.86 | 0.0071 | 0.0042 | 1.12 | 3.32 | - | 0.08 | 0.21 | 0.0042 | 0.0021 |
| 8# | 0.04 | 0.14 | 1.89 | 0.0078 | 0.0043 | 0.92 | 3.48 | - | 0.09 | 0.24 | 0.0049 | 0.0024 |
| 9# | 0.05 | 0.15 | 1.86 | 0.0068 | 0.0038 | 0.91 | 3.69 | - | 0.06 | 0.23 | 0.0043 | 0.0028 |
| 10# | 0.06 | 0.16 | 1.88 | 0.0074 | 0.0045 | 0.74 | 2.22 | 1.08 | 0.14 | - | 0.0038 | 0.0014 |
| 11# | 0.05 | 0.15 | 1.84 | 0.0071 | 0.0047 | 0.68 | 2.32 | 0.88 | 0.16 | - | 0.0045 | 0.0016 |
| 12# | 0.05 | 0.16 | 1.74 | 0.0067 | 0.0051 | 1.02 | 3.12 | 0.62 | 0.12 | - | 0.0041 | 0.0017 |
| 13# | 0.04 | 0.17 | 1.93 | 0.0073 | 0.0047 | 1.32 | 3.26 | - | 0.15 | 0.28 | 0.0036 | 0.0028 |
| 14# | 0.05 | 0.15 | 1.85 | 0.0063 | 0.0038 | 1.35 | 3.54 | - | 0.18 | 0.28 | 0.0041 | 0.0024 |
| 15# | 0.05 | 0.14 | 1.88 | 0.0064 | 0.0042 | 1.38 | 3.72 | - | 0.16 | 0.22 | 0.0037 | 0.0016 |
| 16# | 0.06 | 0.15 | 1.74 | 0.0065 | 0.0043 | 0.89 | 2.52 | 0.68 | 0.12 | 0.23 | 0.0014 | 0.0022 |
| 17# | 0.06 | 0.15 | 1.84 | 0.0054 | 0.0052 | 0.86 | 2.18 | 0.65 | 0.11 | 0.16 | 0.0024 | 0.0026 |
| 18# | 0.05 | 0.14 | 1.87 | 0.0063 | 0.0045 | 0.96. | 2.58 | 0.67 | 0.09 | 0.26 | 0.0023 | 0.0025 |

**Table 3: The mechanical properties of the weld metal in the welded joints prepared from Examples 1 to 18**

| | Tensile strength (MPa) | Elongation (%) | impact energy at -30°C (J) | impact energy at -40°C (J) |
|---|---|---|---|---|
| 1# | 945 | 18.8 | 205, 195, 174 | 156, 138, 144 |
| 2# | 965 | 19.2 | 237, 214, 198 | 134, 138, 135 |
| 3# | 974 | 18.7 | 228, 184, 106 | 128, 144, 133 |
| 4# | 957 | 19.6 | 192, 207, 214 | 137, 145, 129 |
| 5# | 964 | 18.9 | 203, 197, 214 | 141, 133, 126 |
| 6# | 932 | 19.5 | 225, 197, 209 | 135, 126, 143 |
| 7# | 948 | 19.3 | 201, 193, 212 | 125, 126, 122 |
| 8# | 977 | 19.4 | 188, 199, 205 | 128, 127, 124 |
| 9# | 975 | 18.8 | 192, 196, 216 | 136, 143, 129 |
| 10# | 946 | 18.4 | 226, 193, 213 | 134, 148, 145 |
| 11# | 938 | 19.2 | 224, 201, 228 | 166, 143, 142 |
| 12# | 947 | 18.6 | 238, 225, 207 | 132, 149, 128 |
| 13# | 935 | 18.3 | 232, 226, 214 | 142, 156, 145 |
| 14# | 962 | 18.9 | 194, 209, 213 | 152, 145, 137 |
| 15# | 953 | 18.2 | 195, 218, 221 | 131, 145, 154 |
| 16# | 972 | 18.4 | 187, 188, 196 | 142, 127, 134 |
| 17# | 965 | 19.4 | 192, 206, 201 | 137, 129, 143 |
| 18# | 934 | 18.5 | 196, 225, 207 | 133, 146, 134 |

From the above data of examples, it can be seen that the adoption of the technology according to the present invention can lead to defect-free submerged arc pipeline welding joint with weld metal having tensile strength of ≥980 MPa, elongation of ≥18% and impact energy at -40°C of ≥100J, which is suitable for the welding pipe manufacture of ultra-high strength X120 steel grade pipeline.

Also, this invention provides a welding method combined with MgO-SiO₂-CaF₂-Al₂O₃ based weak-alkaline sintering flux, which can realize a welding processing with a high welding speed of 1.8 to 2.4 m/min and a high heat input of 15 to 150 kJ/cm.

Hereinabove, a detailed description has been given to a submerged arc welding wire and a welding method thereof provided by this invention, the principles and embodiments of the invention have been elaborated with reference to specific examples, however, the description of examples above is merely used to help understanding of the method of the present invention and core concept thereof.

## Claims

1. A submerged arc welding wire, **characterized in that** which comprises, by mass percentage:
0.85 to 1.60% of Mo;
2.50 to 4.50% of Ni;
0.10 to 0.30% of Ti;
0.005 to 0.02% of B;
0.005 to 0.02% of REM;
1.60 to 2.00% of Mn;
optionally 0.65 to 1.45% of Cr and/or 0.10 to 0.50% of Cu;
more than 0 and less than or equal to 0.06% of C; more than 0 and less than or equal to 0.10% of Si; less than or equal to 0.008% of P; less than or equal to 0.006% of S; and the remainder being Fe.

2. The submerged arc welding wire according to claim 1, **characterized in that** which comprises 0.65 to 1.45% of Cr which comprises, preferably from 0.85 to 1.25%, and more preferably from 0.95 to 1.15%.

3. The submerged arc welding wire according to claim 1, **characterized in that** which comprises 0.10 to 0.50% of Cu, preferably from 0.20 to 0.40%, and more preferably from 0.25 to 0.35%.

4. A welding method, **characterized in that** which comprises the following steps:
welding a submerged arc welding wire according to any one of claims 1 to 3 with a MgO-SiO₂-CaF₂-Al₂O₃ based weak-alkaline sintering flux to obtain a weld metal.

5. The welding method according to claim 4, **characterized in that** a welding speed of the welding is from 1.8 to 2.4 m/min.

6. The welding method according to claim 4, **characterized in that** a heat input of the welding is from 15 to 150 kJ/cm.

7. The welding method according to claim 4, **characterized in that** which further comprises the following steps:
preheating the MgO-SiO₂-CaF₂-Al₂O₃ based weak-alkaline sintering flux prior to the welding;
wherein the preheating is carried out at a temperature from 300 to 400°C for a period of 1 to 3 hours.

8. A weld metal, **characterized in that** which comprises, by mass percentage:
0.85 to 1.60% of Mo;
2.50 to 4.50% of Ni;
0.005 to 0.30% of Ti;
0.002 to 0.02% of B;
0.002 to 0.02% of REM;
1.60 to 2.00% of Mn;
optionally 0.65 to 1.45% of Cr and/or 0.10 to 0.50% of Cu;
more than 0 and less than or equal to 0.06% of C;
more than 0 and less than or equal to 0.20% of Si;
less than or equal to 0.008% of P;
less than or equal to 0.006% of S; and the remainder being Fe.

9. The weld metal according to claim 8, **characterized in that** which comprises 0.65 to 1.45% of Cr, preferably from 0.85 to 1.25%, and more preferably from 0.95 to 1.15%.

10. The weld metal according to claim 8, **characterized in that** which comprises 0.10 to 0.50% of Cu, preferably from 0.20 to 0.40%, and more preferably from 0.25 to 0.35%.

## Patentansprüche

1. Unterpulver-Bogenschweißdraht, **dadurch gekennzeichnet, dass** er in Massenprozent umfasst:
0,85 bis 1,60% Mo;
2,50 bis 4,50% Ni;
0,10 bis 0,30% Ti;
0,005 bis 0,02% B;
0,005 bis 0,02% REM;
1,60 bis 2,00% Mn;
optional 0,65 bis 1,45% Cr und/oder 0,10 bis 0,50% Cu;
mehr als 0 und weniger als oder gleich 0,06% C;
mehr als 0 und weniger als oder gleich 0,10% Si;
weniger als oder gleich 0,008% P;
weniger als oder gleich 0,006% S;
wobei der Rest Fe ist.

2. Unterpulver-Bogenschweißdraht nach Anspruch 1, **dadurch gekennzeichnet, dass** er 0,65 bis 1,45% Cr umfasst, wobei er vorzugsweise von 0,85 bis 1,25% und stärker bevorzugt von 0,95 bis 1,15% umfasst.

3. Unterpulver-Bogenschweißdraht nach Anspruch 1, **dadurch gekennzeichnet, dass** er 0,10 bis 0,50% Cu, vorzugsweise von 0,20 bis 0,40% und stärker bevorzugt von 0,25 bis 0,35%, umfasst.

4. Schweißverfahren, **dadurch gekennzeichnet, dass** es die folgenden Schritte umfasst:
Schweißen eines Unterpulver-Bogenschweißdrahts nach einem der Ansprüche 1 bis 3 mit einem MgO-SiO₂-CaF₂-Al₂O₃-basierten, schwach alkalischen Sinterflussmittel, um ein Schweißmetall zu erhalten.

5. Schweißverfahren nach Anspruch 4, **dadurch gekennzeichnet, dass** eine Schweißgeschwindigkeit des Schweißens von 1,8 bis 2,4 m/min beträgt.

6. Schweißverfahren nach Anspruch 4, **dadurch gekennzeichnet, dass** ein Wärmeeintrag des Schweißens von 15 bis 150 kJ/cm beträgt.

7. Schweißverfahren nach Anspruch 4, **dadurch gekennzeichnet, dass** es ferner die folgenden Schritte umfasst:
- Vorwärmen des MgO-SiO₂-CaF₂-Al₂O₃-basierten, schwach alkalischen Sinterflussmittels vor dem Schweißen;
- wobei das Vorwärmen bei einer Temperatur von 300 bis 400 °C während eines Zeitraums von 1 bis 3 Stunden durchgeführt wird.

8. Schweißmetall, **dadurch gekennzeichnet, dass** es in Massenprozent umfasst:
0,85 bis 1,60% Mo;
2,50 bis 4,50% Ni;
0,005 bis 0,30% Ti;
0,002 bis 0,02% B;
0,002 bis 0,02% REM;
1,60 bis 2,00% Mn;
optional 0,65 bis 1,45% Cr und/oder 0,10 bis 0,50% Cu;
mehr als 0 und weniger als oder gleich 0,06% C;
mehr als 0 und weniger als oder gleich 0,20% Si;
weniger als oder gleich 0,008% P;
weniger als oder gleich 0,006% S;
wobei der Rest Fe ist.

9. Schweißmetall nach Anspruch 8, **dadurch gekennzeichnet, dass** es 0,65 bis 1,45% Cr, vorzugsweise von 0,85 bis 1,25% und stärker bevorzugt von 0,95 bis 1,15%, umfasst.

10. Schweißmetall nach Anspruch 8, **dadurch gekennzeichnet, dass** es 0,10 bis 0,50% Cu, vorzugsweise von 0,20 bis 0,40% und stärker bevorzugt von 0,25 bis 0,35%, umfasst.

## Revendications

1. Fil de soudage à l'arc submergé, **caractérisé en ce qu'**il comprend, en pourcentages en masse :
0,85 à 1,60 % de Mo ;
2,50 à 4,50 % de Ni ;
0,10 à 0,30 % de Ti ;
0,005 à 0,02 % de B ;
0,005 à 0,02 % de REM (éléments des terres rares) ;
1,60 à 2,00 % de Mn ;
éventuellement 0,65 à 1,45 % de Cr et/ou 0,10 à 0,50 % de Cu ;
plus de 0 et 0,06 % ou moins de C ; plus de 0 et 0,10 % ou moins de Si; 0,008 % ou moins de P ; 0,006 % ou moins de S ; le reste étant du Fe.

2. Fil de soudage à l'arc submergé selon la revendication 1, **caractérisé en ce qu'**il comprend 0,65 à 1,45 %, de préférence 0,85 à 1,25 %, et mieux encore 0,95 à 1,15 % de Cr.

3. Fil de soudage à l'arc submergé selon la revendication 1, **caractérisé en ce qu'**il comprend 0,10 à 0,50 %, de préférence 0,20 à 0,40 %, et mieux encore 0,25 à 0,35 % de Cu.

4. Procédé de soudage, **caractérisé en ce qu'**il comprend les étapes suivantes :
soudage d'un fil de soudage à l'arc submergé de l'une quelconque des revendications 1 à 3 avec un flux de frittage faiblement alcalin à base de MgO-SiO₂-CaF₂-Al₂O₃ pour que soit obtenu un métal d'apport.

5. Procédé de soudage selon la revendication 4, **caractérisé en ce que** la vitesse de soudage du soudage est de 1,8 à 2,4 m/min.

6. Procédé de soudage selon la revendication 4, **caractérisé en ce que** l'apport de chaleur du soudage est de 15 à 150 kJ/cm.

7. Procédé de soudage selon la revendication 4, **caractérisé en ce qu'**il comprend en outre les étapes suivantes :
préchauffage du flux de frittage faiblement alcalin à base de MgO-SiO₂-CaF₂-Al₂O₃ avant le soudage ;
dans lequel le préchauffage est effectué à une température de 300 à 400°C pendant une période de 1 à 3 heures.

8. Métal d'apport, **caractérisé en ce qu'**il comprend, en pourcentages en masse :
0,85 à 1,60 % de Mo ;
2,50 à 4,50 % de Ni ;
0,10 à 0,30 % de Ti ;
0,002 à 0,02 % de B ;
0,002 à 0,02 % de REM (éléments des terres rares) ;
1,60 à 2,00 % de Mn ;
éventuellement 0,65 à 1,45 % de Cr et/ou 0,10 à 0,50 % de Cu ;
plus de 0 et 0,06 % ou moins de C ;
plus de 0 et 0,20 % ou moins de Si ;
0,008 % ou moins de P ;
0,006 % ou moins de S ; et le reste étant du Fe.

9. Métal d'apport selon la revendication 8, **caractérisé en ce qu'**il comprend 0,65 à 1,45 %, de préférence 0,85 à 1,25 %, et mieux encore 0,95 à 1,15 % de Cr.

10. Métal d'apport selon la revendication 8, **caractérisé en ce qu'**il comprend 0,10 à 0,50 %, de préférence 0,20 à 0,40 %, et mieux encore 0,25 à 0,35 % de Cu.
